# EUROPEAN PATENT APPLICATION

(11) **EP 3 624 025 A1**
(43) Date of publication of application: **18.03.2020**
(21) Application number: 18812927.4
(22) Date of filing: 24.04.2018
(51) Int. Cl.: G06Q 10/06, G06F 17/50

(54) **PRODUCT DATA INTEGRATION AND ORGANIZATION METHOD AND CLOUD SERVICE DEVICE**

(30) Priority: 06.06.2017 CN 201710418315
(71) Applicant: Huawei Technologies Co., Ltd., Longgang District Shenzhen, Guangdong 518129 (CN)
(72) Inventor: YI, Hong, Shenzhen Guangdong 518129 (CN); CHENG, Haitao, Shenzhen Guangdong 518129 (CN)
(74) Representative: Goddar, Heinz J.
(86) International application number: PCT/CN2018/084193
(87) International publication number: WO 2018/223785

(57) **Abstract**

Embodiments of the present invention disclose a product material integration and orchestration method and a cloud service apparatus, to provide an automated orchestration service, improve orchestration quality and efficiency, and satisfy a requirement for on-demand customization of product material. The method in the embodiments of the present invention includes: obtaining target content, where the target content includes at least one of the following content: user-generated semantic content, existing semantic content, and semantic content in an orchestration system; and orchestrating the target content based on a product model and an information model, to obtain a product information deliverable.

## Description

This application claims priority to Chinese Patent Application No. 201710418315.1, filed with the Chinese Patent Office on June 6, 2017 and entitled "PRODUCT MATERIAL INTEGRATION AND ORCHESTRATION METHOD AND CLOUD SERVICE APPARATUS", which is incorporated herein by reference in its entirety.

### TECHNICAL FIELD

This application relates to the field of computer and material technologies, and in particular, to a product information integration and orchestration method and a cloud service apparatus.

### BACKGROUND

After network cloud ecology is opened, primary integrators face massive problems of integration, customization, and delivery of cross-vendor information.

A currently adopted solution is mainly: Cross-vendor information is manually integrated, user-generated content (User Generated Content, UGC) is mainly customized manually, and the content is shared and transferred manually. For example, a user obtains an information packet of a vendor A, an information packet of a vendor B, and UGC content of various channels, and the user obtains an information segment of the vendor A, an information segment of the vendor B, and a UGC content segment through manual integration.

However, in the foregoing solution, there is no unified support management platform, and it is very difficult to ensure quality and efficiency of cross-vendor information integration and UGC content customization. As a result, it is unable to adapt to transformation of on-demand customization of product information.

### SUMMARY

This application provides a product material integration and orchestration method and a cloud service apparatus, to provide an automated orchestration service, improve orchestration efficiency, and satisfy a requirement for on-demand customization of product material.

In view of this, a first aspect of this application provides a product material integration and orchestration method, may include:

First, a cloud service apparatus for orchestrating information on demand is developed. A product model and an information model corresponding to a product description object class in the product model are built, product information components in a one-to-one correspondence to product description objects are defined, so that product material is conveniently automatically or manually customized and assembled according to an assembling rule of a product. In addition, based on this, persons of various writing abilities in a product life cycle who are authorized with and opened to an orchestration capacity of a product information component and a product information deliverable can define a product information model, a semantic product information component, and metadata (Metadata), so that the persons can readily access the Internet to perform low-entry-barrier DIY on-demand orchestration of product information. For example, the cloud service apparatus obtains target content, where the target content includes at least one of the following content: user-generated semantic content, existing semantic content, and semantic content in an orchestration system; and the cloud service apparatus orchestrates the target content based on the product model and the information model, to obtain a product information deliverable. It can be learned that, the cloud service apparatus can provide an automated orchestration service, to improve orchestration efficiency and satisfy a requirement for on-demand customization of product material.

In some possible implementations, the method may further include: after the product model and the information model corresponding to the product model are built, automatically or manually customizing or assembling, by a user using the orchestration system, required product material according to a logic rule used for assembling the product description object into a product, to obtain the customized or assembled product material by using the cloud service apparatus.

In some other possible implementations, if the target content includes the user-generated semantic content, the obtaining target content may be: determining, by the user using the orchestration system, based on a difference between a to-be-customized product whose information needs to be orchestrated by the user and an existing product description object tree and a product description object model in the orchestration system, whether the product description object class needs to be newly added. If the product description object class needs to be newly added, the user needs to customize an information component content model corresponding to the product description object class. Correspondingly, the cloud service apparatus obtains the product description object class newly added by the user; determines a first information component content model corresponding to the product description object class; determines a first UGC component based on the first information component content model; may select semantic archiving; and obtains, based on the first UGC component, semantic content newly written by the user or semantic content rewritten by the user.

In some other possible implementations, if the target content includes the user-generated semantic content, the obtaining target content may further be: determining, by the user using the orchestration system, based on a difference between a to-be-customized product whose information needs to be orchestrated by the user and an existing product description object tree and a product description object model in the orchestration system, whether a product description object needs to be newly added. If the product description object needs to be newly added, the user may newly write semantic content in an information component content model in the product description object. Correspondingly, if the product description object needs to be newly added, a second information component content model corresponding to the product description object is determined, a second UGC component is determined based on the second information component content model, and semantic content newly written by the user or semantic content rewritten by the user is obtained based on the second UGC component.

In some other possible implementations, if the target content includes the existing semantic content, the obtaining target content may further be: determining, by the user using the orchestration system, whether there is existing non-semantic content such as third-party information content or already existing content that needs to be introduced to the orchestration system through conversion, and if determining that there is existing non-semantic content that needs to be introduced to the orchestration system through conversion, completing conversion of the existing non-semantic content by using the cloud service apparatus. That is, the cloud service apparatus obtains the existing non-semantic content, and converts the existing non-semantic content into the existing semantic content.

In some other possible implementations, the converting the existing non-semantic content into the existing semantic content may be: defining, by the user using the orchestration system, based on information of an existing product, a product description object tree of the existing product, and abstracting a description object class of the product based on this, and complementing metadata related to newly-added existing content; customizing, by the user, an information component model corresponding to the newly-added description object class of the existing product; and converting an information deliverable template of the existing product into an information deliverable template that is based on the product description object class by using the cloud service apparatus; and generating a standard information component list of the existing product based on the product description object tree, a product information component model, and the information deliverable template. Correspondingly, the cloud service apparatus determines the product description object tree of the existing non-semantic content; determines the product information component model that corresponds to the newly-added product description object class of the existing non-semantic content and that is customized by the user; converts an information deliverable template of the existing non-semantic content into the information deliverable template that is based on the product description object class; and converts the existing non-semantic content into the existing semantic content based on the product description object tree, the product information component model, and the information deliverable template.

In some other possible implementations, if the target content includes the semantic content in the orchestration system, the obtaining target content may further be: determining, by the user using the orchestration system, whether the existing semantic content in the orchestration system needs to be filtered and orchestrated, and if the user needs to filter and orchestrate the existing semantic content in the orchestration system, filtering and orchestrating the existing semantic content in the orchestration system by using the cloud service apparatus. That is, the cloud service apparatus may obtain the product description object tree, and filter and orchestrate the product description object tree, to obtain the semantic content; or the cloud service apparatus may obtain an initial product information deliverable in the orchestration system, and filter and orchestrate the initial product information deliverable, to obtain the semantic content.

A second aspect of this application provides a cloud service apparatus, and the cloud service apparatus is configured to implement functions of the method provided in the first aspect or any optional implementation of the first aspect. The cloud service apparatus is implemented by using software, the software of the cloud service apparatus includes modules corresponding to the foregoing functions, and the modules are configured to implement the corresponding functions.

A third aspect of this application provides a computer storage medium, storing a computer program, where when the program is executed by a processor, the method provided in the first aspect or any optional implementation of the first aspect is implemented.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of this application, and ordinary persons skilled in the art may still derive other drawings from these accompanying drawings.
FIG. 1 is a schematic diagram of an application scenario of product material integration and orchestration according to this application;
FIG. 2 is a schematic diagram of an embodiment of a product material integration and orchestration method according to this application;
FIG. 3 is a schematic diagram of an embodiment of a cloud service apparatus according to this application; and
FIG. 4 is a schematic diagram of another embodiment of a cloud service apparatus according to this application.

### DESCRIPTION OF EMBODIMENTS

This application provides an information integration and orchestration method and a cloud service apparatus, to provide an automated orchestration service, improve orchestration efficiency, and satisfy a requirement for on-demand customization of product material.

The following clearly and completely describes the technical solutions in the embodiments of this application with reference to the accompanying drawings in the embodiments of this application. Apparently, the described embodiments are merely a part rather than all of the embodiments of this application.

In the specification, claims, and accompanying drawings of this application, the terms "first", "second", "third", "fourth", and so on (if any) are intended to distinguish between similar objects but do not necessarily indicate a specific order or sequence. It should be understood that the data termed in such a way are interchangeable in proper circumstances so that the embodiments described herein can be implemented in other orders than the order illustrated or described herein. Moreover, the terms "include", "contain" and any other variants mean to cover the non-exclusive inclusion, for example, a process, method, system, product, or device that includes a list of steps or units is not necessarily limited to those expressly listed steps or units, but may include other steps or units not expressly listed or inherent to such a process, method, system, product, or device.

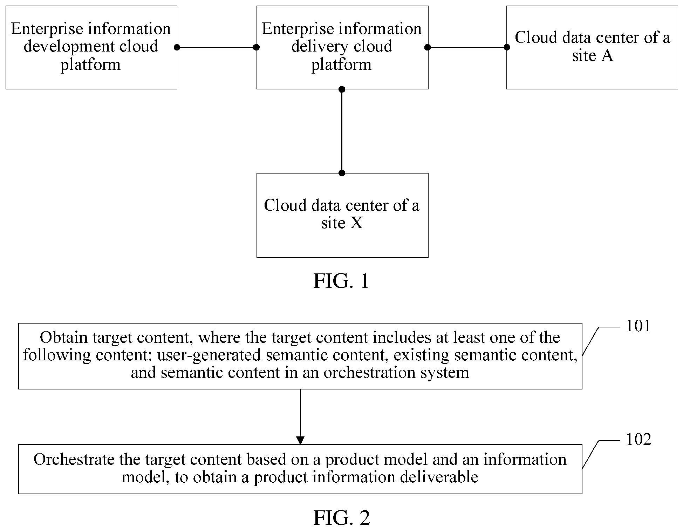

This application provides a product material integration and orchestration method, and the following describes an application scenario of product material integration and orchestration of this application. Referring to FIG. 1, FIG. 1 is a schematic diagram of an application scenario of product material integration and orchestration according to this application. In FIG. 1, the schematic diagram of the application scenario includes the following four parts: an enterprise information development cloud platform, an enterprise information delivery cloud platform, a cloud data center of a site A, and a cloud data center of a site X.

The enterprise information development cloud platform is an information development cloud environment used by professional information developer in an enterprise, including a professional product information design, development, translation, and publishing platform, a product model (a product description object library), a content model (an information component content model and an information deliverable model), and a semantic product information component library.

The enterprise information delivery cloud platform is a platform by using which product information deliverables corresponding to full products are usually delivered to a user. The cloud service apparatus provided in this application is deployed on the information delivery cloud platform, and users who may access the Internet may access an information orchestration cloud service by using a browser based on permission, to orchestrate information on demand.

The cloud data center of the site A and the cloud data center of the site X may represent a cloud data center of each site, and a corresponding cloud service is deployed in the cloud data center. Usually, a cloud data center of a site is a relatively closed environment. In this case, a person at the site may directly orchestrate semantic content in a product information deliverable library in an information center cloud service by using the information orchestration cloud service, to customize and orchestrate related product information content for a secondary developer or a renter at the site.

The following describes the cloud service apparatus provided in this application, and the cloud service apparatus may be divided into six layers, namely, a user layer, a user interface layer, a business service layer, a data management layer, a data invocation layer, and a data layer.

User layer: Neither limited by time nor by space, the user layer, once connecting to a network can access, by using a client, an automated orchestration cloud service to provide on-demand information orchestration.

User interface layer: The user interface layer includes the following components: a permission and security management and control microservice, an information deliverable and product description object tree editor, an information component editing service, a content filtering service, and an existing content conversion interface. The permission and security management and control microservice is used to perform group-based authentication on users, control an openness level of product information content and an automated orchestration capacity, and ensure product information security and system security. The information deliverable and product description object tree editor is configured to provide a function of editing an information deliverable and a product description object tree. The information component editing service is used to provide a service of editing an information component. The content filtering service is used to provide a function of filtering an interface for metadata based on an information content condition. The existing content conversion interface is used to create an interface support, such as an interface, between an existing external existing content template and an information model in a system.

Business service layer: The business service layer includes the following components: an information deliverable publishing service, a content filtering management service, a UGC management service, and an external content conversion service. The information deliverable publishing service is used to publish a specific information deliverable based on an information deliverable submitted by the user. The content filtering management service is used to support a function of filtering an information content condition based on the metadata. The UGC management service is used to support management functions of adding, deleting, modifying, and searching UGC information. The external content conversion service is used to implement a specific content conversion function, to convert content of a third-party vendor or other existing content into unified semantic content that is of the information model and that can be assembled on demand.

Data management service layer: The data management service layer includes the following components: a content semantic service and a metadata management service. The content semantic service is used to support non-information users such as an internal non-information user, an external non-information user, a channel non-information user, or a primary integrator in supplementing, based on permission, a field and selecting a value on demand for an existing metadata system, to support unified management and control and orchestration of different types of external content.

Data invocation service layer: The data invocation service layer includes the following components: a product description object tree generation and management service, a product description object and object class generation and management service, an information model management service, an information component management service, an information deliverable management service, and a cross-service information component invocation service. The product description object tree generation and management service is used to provide an object-based product structure tree for a product, so that internal and external users make modifications on demand to generate a product information deliverable complying with a user-customized product. The product description object and object class generation and management service is used to support the internal and external users in adding, managing and controlling, and using, based on permission, a product object and a product object class corresponding to an external information component on demand. The information model management service is used to support the internal and external users in adding and managing and controlling a related information model on demand based on permission. The information component management service is used to manage and control an information component, and support orchestration and integration on demand. The information deliverable management service is used to support management of information deliverables. The cross-service information component invocation service is used to support a sharing and invocation function of a cross-service information component.

Data layer: The data layer includes the following components: a product description object structure tree, a product description object, and a product description object class library used to store a product description object structure tree of an existing product, a product description object, and a product description object class, and support flexible assembling and orchestration of product material of a to-be-customized product based on a product description object. An information component and information deliverable content template library is used to store an information component content model that is based on the product description object and that is of the existing product of the vendor, and a standard information deliverable template. An internal information component library and information deliverable library are used to store an information component that is based on the product description object and that is of the existing product of the vendor, and a standard information deliverable. A UGC information component library and information deliverable library are used to store various internal and external information components generated by the user, and information deliverables customized by the user. An external information component library and information deliverable library are used to store an information component that is based on the product description object and that is obtained after conversion performed by the third-party vendor, and an information deliverable obtained after conversion. A metadata base is a metadata base used for defining and identifying information categories.

The following describes a product material integration and orchestration method in this application by using an embodiment. Referring to FIG. 2, an embodiment of the product material integration and orchestration method in this application includes the following steps.

101. Obtain target content, where the target content includes at least one of the following content: user-generated semantic content, existing semantic content, and semantic content in an orchestration system.

In this embodiment, a cloud service apparatus builds a product model and an information model corresponding to a product description object class in the product model, and the cloud service apparatus defines a correspondence between product description objects and product information components.

The target content obtained by the cloud service apparatus includes at least one of the following content: the user-generated semantic content, the existing semantic content, and the semantic content in the orchestration system.

For example, when a user enters into an orchestration service interface of the cloud service apparatus, the user determines whether the user has content that needs to be newly written or content that needs to be rewritten. Herein, the content that needs to be newly written or content that needs to be rewritten is relative to existing semantic content in the orchestration system. If the user uses the semantic content already provided by a vendor in the orchestration system to perform only a logic-level change, it indicates that the user does not have content that needs to be newly written or content that needs to be rewritten. If the user determines that the user has content that needs to be newly written or content that needs to be rewritten, the user needs to generate semantic content. After the cloud service apparatus determines that the user has a demand for generating the semantic content, the cloud service apparatus may support the user in completing an operation of generating the semantic content, that is, the target content obtained by the cloud service apparatus includes the user-generated semantic content.

For another example, when the user enters the orchestration service interface of the cloud service apparatus, the user determines whether there is existing non-semantic content converted into the semantic content, the non-semantic content may be third-party information content, already existing content, or the like. If the user determines that there is existing non-semantic content that needs to be converted into existing semantic content, after the cloud service apparatus determines that the user has a demand for converting the existing non-semantic content into the existing semantic content, the cloud service apparatus may support the user in converting the existing non-semantic content into the existing semantic content, that is, the target content obtained by the cloud service apparatus includes the existing semantic content.

For another example, when the user enters the orchestration service interface of the cloud service apparatus, the user determines whether the existing semantic content in the orchestration system needs to be filtered and orchestrated. If the user determines that the existing semantic content in the orchestration system needs to be filtered and orchestrated, after the cloud service apparatus determines that the user has a demand for filtering and orchestrating the existing semantic content in the orchestration system, the cloud service apparatus may support the user in filtering and orchestrating the existing semantic content in the orchestration system, that is, the target content obtained by the cloud service apparatus includes the semantic content in the orchestration system.

In some possible implementations, the method may further include: assembling or customizing product material according to a logic rule used for assembling the product description object into a product.

In this embodiment, after the product model and the information model corresponding to the product model are built, the user using the orchestration system automatically or manually customizes or assembles required product material according to the logic rule used for assembling the product description object into a product, to obtain the customized or assembled product material by using the cloud service apparatus.

In some possible implementations, if the target content includes the user-generated semantic content, the obtaining target content includes: obtaining a product description object class newly added by a user; determining a first information component content model corresponding to the product description object class; determining a first user-generated content UGC component based on the first information component content model; and obtaining the user-generated semantic content based on the first UGC component, where the user-generated semantic content includes semantic content newly written by the user or semantic content rewritten by the user.

In this embodiment, the user using the orchestration system determines, based on a difference between a to-be-customized product whose information needs to be orchestrated by the user and an existing product description object tree and a product description object model in the orchestration system, whether a product description object class needs to be newly added. If the product description object class needs to be newly added, the user needs to customize an information component content model corresponding to the product description object class. Correspondingly, the cloud service apparatus obtains the product description object class newly added by the user; determines the first information component content model corresponding to the product description object class; determines the first UGC component based on the first information component content model; may select semantic archiving; and obtains, based on the first UGC component, semantic content newly written by the user or semantic content rewritten by the user.

In some possible implementations, if the target content includes the user-generated semantic content, the obtaining target content includes: obtaining a product description object newly added by a user; determining a second information component content model corresponding to the product description object; determining a second UGC component based on the second information component content model; and obtaining the user-generated semantic content based on the second UGC component, where the user-generated semantic content includes semantic content newly written by the user or semantic content rewritten by the user.

In this embodiment, the user using the orchestration system determines, based on a difference between a to-be-customized product whose information needs to be orchestrated by the user and an existing product description object tree and a product description object model in the orchestration system, whether a product description object needs to be newly added. If the product description object needs to be newly added, the user may newly write semantic content in an information component content model in the product description object. Correspondingly, if the product description object needs to be newly added, the second information component content model corresponding to the product description object is determined, the second UGC component is determined based on the second information component content model, and the semantic content newly written by the user or the semantic content rewritten by the user is obtained based on the second UGC component.

In some possible implementations, if the target content includes the existing semantic content, the obtaining target content includes: obtaining the existing non-semantic content; and converting the existing non-semantic content into the existing semantic content.

In this embodiment, the user using the orchestration system determines whether there is existing non-semantic content such as third-party information content or already existing content that needs to be introduced to the orchestration system through conversion, and if determining that there is existing non-semantic content that needs to be introduced to the orchestration system through conversion, the user completes conversion of the existing non-semantic content by using the cloud service apparatus. That is, the cloud service apparatus obtains the existing non-semantic content, and converts the existing non-semantic content into the existing semantic content.

In some possible implementations, the converting the existing non-semantic content into the existing semantic content includes: determining a product description object tree of the existing non-semantic content; determining a product information component model that corresponds to the newly-added product description object class of the existing non-semantic content and that is customized by the user; converting an information deliverable template of the existing non-semantic content into an information deliverable template that is based on the product description object class; and converting the existing non-semantic content into the existing semantic content based on the product description object tree, the product information component model, and the information deliverable template.

In this embodiment, the user using the orchestration system defines, based on information of an existing product, a product description object tree of the existing product, and abstracts a description object class of the product based on this, and complements metadata related to newly-added existing content; the user customizes an information component model corresponding to the newly-added description object class of the existing product; and converts an information deliverable template of the existing product into an information deliverable template that is based on the product description object class by using the cloud service apparatus; and generates a standard information component list of the existing product based on the product description object tree, the product information component model, and the information deliverable template. Correspondingly, the cloud service apparatus determines the product description object tree of the existing non-semantic content; determines the product information component model that corresponds to the newly-added product description object class of the existing non-semantic content and that is customized by the user; converts an information deliverable template of the existing non-semantic content into the information deliverable template that is based on the product description object class; and converts the existing non-semantic content into the existing semantic content based on the product description object tree, the product information component model, and the information deliverable template.

In some possible implementations, if the target content includes the semantic content in the orchestration system, the obtaining target content includes: obtaining the product description object tree; and filtering and orchestrating the product description object tree, to obtain the semantic content; or obtaining an initial product information deliverable in the orchestration system; and filtering and orchestrating the initial product information deliverable, to obtain the semantic content.

In this embodiment, the user filters and orchestrates the product description object tree, for example, adds an object, deletes an object, modifies an object, or changes a logic layer of an object tree, to automatically filter customized product information corresponding to the product description object tree. Alternatively, the user filters, by directly defining a filtering condition, a product information deliverable that is provided by the vendor in the orchestration system, selects content required by the user, and then implements orchestration.

102. Orchestrate the target content based on a product model and an information model, to obtain a product information deliverable.

In this embodiment, the cloud service apparatus may perform mixed orchestration on the target content based on the product model and the information model, to obtain a product information deliverable.

For example, the cloud service apparatus may perform, based on the product model and the information model, on-demand mixed orchestration on the semantic content provided by the vendor, the user-generated semantic content, and the existing semantic content obtained after conversion in the orchestration system, and publish content obtained after the on-demand mixed orchestration as a user-customized product information deliverable.

In this embodiment, an automated orchestration service is provided based on the product model and the information model, efficiency and quality are improved, entry barriers and difficulty of information orchestration are reduced, and the automated orchestration service is applicable to unprofessional information developers of various skills.

In addition, a user development capacity and an automated orchestration and assembling capacity based on a model and a template are opened based on permission. This is quick and convenient. An automatic batch conversion function is provided, so that it is convenient to convert, in a unified manner, massive third-party existing content into semantic content that can be managed and orchestrated by a system.

Finally, requirements of products for ready, on-demand, online, convenient design and development of product material, open ecology, and the like are satisfied.

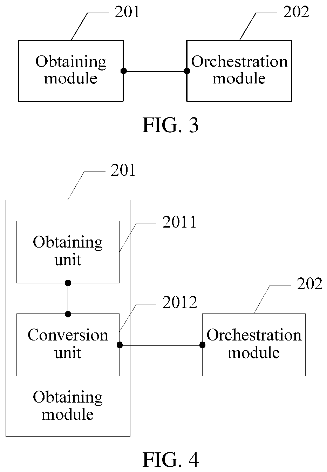

The foregoing describes the product material integration and orchestration method in this application by using the embodiment, and the following describes a cloud service apparatus in this application by using embodiments. Referring to FIG. 3, an embodiment of the cloud service apparatus in this application includes:
an obtaining module 201, configured to obtain target content, where the target content includes at least one of the following content: user-generated semantic content, existing semantic content, and semantic content in an orchestration system; and
an orchestration module 202, configured to orchestrate the target content based on a product model and an information model, to obtain a product information deliverable, where
the cloud service apparatus builds a product model and an information model corresponding to a product description object class in the product model, and the cloud service apparatus defines a correspondence between product description objects and product information components.

In this embodiment, the cloud service apparatus can provide an automated orchestration service, to improve orchestration efficiency and satisfy a requirement for on-demand customization of product material.

Based on the embodiment shown in FIG. 3, in some possible embodiments, the obtaining module 201 is further configured to assemble or customize product material according to a logic rule used for assembling the product description object into a product.

In some possible implementations, if the target content includes the user-generated semantic content, the obtaining module 201 is specifically configured to: obtain a product description object class newly added by a user; determine a first information component content model corresponding to the product description object class; determine a first user-generated content UGC component based on the first information component content model; and obtain the user-generated semantic content based on the first UGC component, where the user-generated semantic content includes semantic content newly written by the user or semantic content rewritten by the user.

In some possible implementations, if the target content includes the user-generated semantic content, the obtaining module 201 is specifically configured to: obtain a product description object newly added by a user; determine a second information component content model corresponding to the product description object; determine a second UGC component based on the second information component content model; and obtain the user-generated semantic content based on the second UGC component, where the user-generated semantic content includes semantic content newly written by the user or semantic content rewritten by the user.

Referring to FIG. 4, in some possible implementations, if the target content includes the existing semantic content, the obtaining module 201 includes: an obtaining unit 2011, configured to obtain existing non-semantic content; and a conversion unit 2012, configured to convert the existing non-semantic content into the existing semantic content.

In some possible implementations, the conversion unit 2012 is specifically configured to: determine a product description object tree of the existing non-semantic content; determine a product information component model that corresponds to the newly-added product description object class of the existing non-semantic content and that is customized by the user; convert an information deliverable template of the existing non-semantic content into an information deliverable template that is based on the product description object class; and convert the existing non-semantic content into the existing semantic content based on the product description object tree, the product information component model, and the information deliverable template.

In some possible implementations, if the target content includes the semantic content in the orchestration system, the obtaining module 201 is specifically configured to: obtain the product description object tree, and filter and orchestrate the product description object tree, to obtain the semantic content; or obtain an initial product information deliverable in the orchestration system, and filter and orchestrate the initial product information deliverable, to obtain the semantic content.

In the foregoing embodiment, the cloud service apparatus may be implemented all or partially by using software, or may be implemented all or partially in a form of a computer program product.

The computer program product includes one or more computer instructions. When the computer program instructions are loaded and executed on the computer, the procedures or functions according to the embodiments of the present invention are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk Solid State Disk, (SSD)), or the like.

It may be clearly understood by persons skilled in the art that, for the purpose of convenient and brief description, for a detailed working process of the foregoing system, apparatus, and unit, refer to a corresponding process in the foregoing method embodiments, and details are not described herein.

In the several embodiments provided in this application, it should be understood that the disclosed system, apparatus, and method may be implemented in other manners. For example, the described apparatus embodiment is merely an example. For example, the unit division is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of this application may be integrated into one processing unit, or each of the units may exist alone physically, or two or more units are integrated into one unit. The foregoing integrated unit may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the prior art, or all or a part of the technical solutions may be implemented in the form of a software product. The software product is stored in a storage medium and includes several instructions for instructing a computer device (which may be a personal computer, a server, or a network device) to perform all or a part of the steps of the methods described in the embodiments of this application. The foregoing storage medium includes: any medium that can store program code, such as a USB flash drive, a removable hard disk, a read-only memory (ROM, Read-Only Memory), a random access memory (RAM, Random Access Memory), a magnetic disk, or a compact disc.

The foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of the embodiments of this application.

## Claims

1. A product material integration and orchestration method, applied to a cloud service apparatus, wherein the cloud service apparatus builds a product model and an information model corresponding to a product description object class in the product model, and the cloud service apparatus defines a one-to-one correspondence between product description objects and product information components; and the method comprises:
obtaining target content, wherein the target content comprises at least one of the following content: user-generated semantic content, existing semantic content, and semantic content in an orchestration system; and
orchestrating the target content based on the product model and the information model, to obtain a product information deliverable.

2. The method according to claim 1, wherein the method further comprises:
assembling or customizing product material according to a logic rule used for assembling the product description object into a product.

3. The method according to claim 1 or 2, wherein if the target content comprises the user-generated semantic content, the obtaining target content comprises:
obtaining a product description object class newly added by a user;
determining a first information component content model corresponding to the product description object class;
determining a first user-generated content UGC component based on the first information component content model; and
obtaining the user-generated semantic content based on the first UGC component, wherein the user-generated semantic content comprises semantic content newly written by the user or semantic content rewritten by the user.

4. The method according to claim 1 or 2, wherein if the target content comprises the user-generated semantic content, the obtaining target content comprises:
obtaining a product description object newly added by a user;
determining a second information component content model corresponding to the product description object;
determining a second UGC component based on the second information component content model; and
obtaining the user-generated semantic content based on the second UGC component, wherein the user-generated semantic content comprises semantic content newly written by the user or semantic content rewritten by the user.

5. The method according to any one of claims 1 to 4, wherein if the target content comprises the existing semantic content, the obtaining target content comprises:
obtaining existing non-semantic content; and
converting the existing non-semantic content into the existing semantic content.

6. The method according to claim 5, wherein the converting the existing non-semantic content into the existing semantic content comprises:
determining a product description object tree of the existing non-semantic content;
determining a product information component model that corresponds to the newly-added product description object class of the existing non-semantic content and that is customized by the user;
converting an information deliverable template of the existing non-semantic content into an information deliverable template that is based on the product description object class; and
converting the existing non-semantic content into the existing semantic content based on the product description object tree, the product information component model, and the information deliverable template.

7. The method according to any one of claims 1 to 6, wherein if the target content comprises the semantic content in the orchestration system, the obtaining target content comprises:
obtaining the product description object tree; and
filtering and orchestrating the product description object tree, to obtain the semantic content; or
obtaining an initial product information deliverable in the orchestration system; and
filtering and orchestrating the initial product information deliverable, to obtain the semantic content.

8. A cloud service apparatus, wherein the cloud service apparatus builds a product model and an information model corresponding to a product description object class in the product model, and the cloud service apparatus defines a one-to-one correspondence between product description objects and product information components; and the cloud service apparatus comprises:
an obtaining module, configured to obtain target content, wherein the target content comprises at least one of the following content: user-generated semantic content, existing semantic content, and semantic content in an orchestration system; and
an orchestration module, configured to orchestrate the target content based on the product model and the information model, to obtain a product information deliverable.

9. The cloud service apparatus according to claim 8, wherein the obtaining module is further configured to assemble or customize product material according to a logic rule used for assembling the product description object into a product.

10. The cloud service apparatus according to claim 8 or 9, wherein if the target content comprises the user-generated semantic content, the obtaining module is specifically configured to:
obtain a product description object class newly added by a user; determine a first information component content model corresponding to the product description object class; determine a first user-generated content UGC component based on the first information component content model;
and obtain the user-generated semantic content based on the first UGC component, wherein the user-generated semantic content comprises semantic content newly written by the user or semantic content rewritten by the user.

11. The cloud service apparatus according to claim 8 or 9, wherein if the target content comprises the user-generated semantic content, the obtaining module is specifically configured to:
obtain a product description object newly added by a user; determine a second information component content model corresponding to the product description object; determine a second UGC component based on the second information component content model; and obtain the user-generated semantic content based on the second UGC component, wherein the user-generated semantic content comprises semantic content newly written by the user or semantic content rewritten by the user.

12. The cloud service apparatus according to any one of claims 8 to 11, wherein if the target content comprises the existing semantic content, the obtaining module comprises:
an obtaining unit, configured to obtain existing non-semantic content; and
a conversion unit, configured to convert the existing non-semantic content into the existing semantic content.

13. The cloud service apparatus according to claim 12, wherein the conversion unit is specifically configured to: determine a product description object tree of the existing non-semantic content; determine a product information component model that corresponds to the newly-added product description object class of the existing non-semantic content and that is customized by the user; convert an information deliverable template of the existing non-semantic content into an information deliverable template that is based on the product description object class; and convert the existing non-semantic content into the existing semantic content based on the product description object tree, the product information component model, and the information deliverable template.

14. The cloud service apparatus according to any one of claims 8 to 13, wherein if the target content comprises the semantic content in the orchestration system, the obtaining module is specifically configured to: obtain the product description object tree, and filter and orchestrate the product description object tree, to obtain the semantic content; or obtain an initial product information deliverable in the orchestration system, and filter and orchestrate the initial product information deliverable, to obtain the semantic content.

15. A computer storage medium, storing a computer program, wherein when the program is executed by a processor, the steps in the method according to any one of claims 1 to 7 are implemented.
